# EUROPEAN PATENT APPLICATION

(11) **EP 2 140 957 A1**
(43) Date of publication of application: **06.01.2010**
(21) Application number: 07742840.7
(22) Date of filing: 25.04.2007
(51) Int. Cl.: B22F 1/02

(54) **PROCESS FOR PRODUCING CORE/SHELL COMPOSITE NANOPARTICLE**

(71) Applicant: Toyota Jidosha Kabushiki Kaisha, Toyota-shi, Aichi 471-8571 (JP)
(72) Inventor: SHOJI, Tetsuya, Aichi 471-8571 (JP); NAKAMURA, Naoki, Aichi 471-8571 (JP); KATO, Akira, Aichi 471-8571 (JP); YAMAMOTO, Shinpei, Uji-shi Kyoto 611-0011 (JP); TAKANO, Mikio, Uji-shi Kyoto 611-0011 (JP); ONO, Teruo, Uji-shi Kyoto 611-0011 (JP)
(74) Representative: Jackson, Martin Peter
(86) International application number: PCT/JP2007/059405
(87) International publication number: WO 2008/136131

(57) **Abstract**

A method of producing core/shell composite nano-particles exhibiting superior characteristics, by using as cores nano-particles heat treated in advance so as to give them a specific crystal structure in a state using a barrier layer to prevent sintering and forming shells on their surface, which eliminates hindrances to the shell forming reaction due to the phase transfer catalyst or other strongly sticky dispersant, is provided. A method of producing core/shell composite nano-particles comprising nano-sized core particles covered by shells, the method comprising dispersing core particles heat treated in advance to give them a crystal structure expressing the necessary characteristics in a first organic solvent by a first dispersant to prepare a first solution, adding a polar solvent to peel off the first dispersant from the core particles and making the nano-particles agglomerate to recover them, making the recovered core particles disperse in a second organic solvent by a second dispersant to form a second solution, and adding a precursor of the shells to the second solution and forming shells on the surfaces of the core particles.

## Description

### Technical Field

The present invention relates to a method of producing core/shell composite nano-particles comprised of nano-sized core particles covered by shells.

### Background Art

In recent years, attention has been drawn to nano composite materials obtained by finely mixing two phases having different characteristics on a nano scale (tens of nm or less) and exhibiting superior characteristics not attainable by bulk composite materials or single phase materials.

As one representative form of a nanocomposite material, there has been proposed core/shell composite nano-particles comprised of nano-particles with useful characteristics (so-called "functional nano-particle") as cores over the surfaces of which shells with characteristics different from the cores are covered.

In functional nano-particles used as the cores, the crystal structure has two states: an ordered structure and disordered structure. Particles usually exhibit useful characteristics only in the state of the ordered structure. Such functional nano-particles are generally formed by a chemical solution synthesis method, however the nano-particles as synthesized are in the state of a disordered structure. In that state, their inherent functional characteristics are not exhibited.

Accordingly, even if covering the as-synthesized nano-particles by shells, the characteristics anticipated from the core/shell composite nano-particles cannot be obtained.

Therefore, it may be considered to heat treat this in the core/shell composite state by a temperature exceeding the ordered/disordered transformation point of the core particles so as to convert the core particles to an ordered structure. However, in actuality, the ordered/disordered transformation point is often a high temperature where atoms of the cores and shells actively disperse. Interdiffusion of constituent elements ends up occurring between the cores/shells, and the core/shell composite structure, which is distinctly separated into two phases, breaks down.

To avoid this, it is necessary to apply heat treatment to the nano-particles to convert them to an ordered structure in advance before shell formation. However, nano-sized fine particles easily agglomerate and end up sintering at the heat treatment temperature, so there is a problem in that the particles cannot be converted to an ordered structure while preserving the nano size.

Therefore, some of the present applicants proposed in Japanese Patent Application No. 2005-261617 a method of covering nano-particles with a sinter prevention barrier layer, then applying heat treatment. The barrier layer is removed after the heat treatment. This enables the particles to be converted to an ordered structure while preserving the nano size.

However, the barrier layer is removed by treatment in an aqueous solution, but nano-particles with exposed surfaces are easily oxidized by the solvent, that is, water, so they are quickly moved to an organic solvent with no risk of oxidation. At that time, the nano-particles are moved from the water to the organic solvent by a phase transfer catalyst.

However, with this proposed method, the surfaces of the nano-particles dispersed in the organic solvent are covered by the dispersant constituted by the phase transfer catalyst strongly sticking to the same, so there was the problem that the reaction for forming shells on the surfaces of the nano-particles could not be performed in that state.

Thus, a method of using as cores nano-particles heat treated in advance so as to give them a specific crystal structure in a state using a barrier layer to prevent sintering and forming shells on their surfaces, which eliminates hindrances to the shell forming reaction due to the phase transfer catalyst or other strongly sticky dispersant and thereby produces core/shell composite nano-particles exhibiting superior characteristics has been sought.

In the past, there have been various proposals pertaining to the creation of functional nano-particles having a core/shell composite structure.

Japanese Patent Publication (A) No. 6-69017 and Japanese Patent Publication (A) No. 6-69018 describe a method of suspending ferrite fine particles as cores in water, adding an aqueous solution of a dispersant and metal ions, and heat treating the obtained mixed suspension to produce composite ferrite magnetic powder comprised of ferrite fine particles on the surfaces of which shells comprised of spinel ferrite are formed. The dispersant used in the shell forming step has to not impede the shell forming reaction, but sometimes the dispersant used in the step of formation of the core particles is not necessarily suited for the shell forming reaction. Japanese Patent Publication (A) No. 6-69017 and Japanese Patent Publication (A) No. 6-69018 do not take into consideration, from this viewpoint, selectively using dispersants when forming the cores and shells, so core/shell composite nano-particles cannot be reliably produced. Further, there is no suggestion of the case of requiring heat treatment to give the cores an ordered structure or other specific crystal structure.

Japanese Patent Publication (A) No. 2005-103746 discloses moving the nano-particles from a water-based solvent to an oil-based solvent in the presence of a surfactant or an amphipathic organic compound when coating semiconductor nano-particles used as cores by an organic compound used as shells. There is no suggestion of the case of requiring heat treatment to give cores an ordered structure or other specific crystal structure.

Japanese Patent Publication (A) No. 2005-48250 discloses making a surfactant stick to the surfaces of FePt nano-particles so as to make the nano-particles disperse at predetermined intervals, but there is no suggestion at all of a core/shell composite structure and accordingly there is no suggestion of the case of requiring heat treatment to give cores an ordered structure or other specific crystal structure.

Japanese Patent Publication (A) No. 2004-528550 discloses using a surfactant when applying coating on magnetizable fine particles, but there is no suggestion of the case of requiring heat treatment to give cores an ordered structure or other specific crystal structure.

### Disclosure of Invention

The present invention has as its object to provide a method of producing core/shell composite nano-particles exhibiting superior characteristics, by using as cores nano-particles heat treated in advance so as to give them a specific crystal structure in a state using a barrier layer to prevent sintering and forming shells on their surfaces, which eliminates hindrances to the shell forming reaction due to the phase transfer catalyst or other strongly sticky dispersant.

To achieve the object, according to the present invention, there is provided a method of producing core/shell composite nano-particles comprising nano-sized core particles covered by shells, the method comprising:
a step of dispersing core particles heat treated in advance to give them a crystal structure expressing the necessary characteristics in a first organic solvent by a first dispersant to prepare a first solution,
a step of adding a polar solvent to the first solution to peel off the first dispersant from the core' particles and making the nano-particles agglomerate to recover them,
a step of making the recovered core particles disperse in a second organic solvent by a second dispersant to form a second solution, and
a step of adding a precursor of the shells to the second solution and forming shells on the surfaces of the core particles.

According to the method of the present invention, even when the first dispersant dispersing the heat treated core particles is a phase transfer catalyst or other dispersant that impedes a shell forming reaction on the core particle surfaces, it is possible to form the shells by adding a polar solvent to peel off the first dispersant from the core particles to make the core particles agglomerate and selecting as a second dispersant to be given to the agglomerated core particles one which does not impede the shell forming reaction, so core/shell composite nano-particles comprising nano-sized heated treated cores covered by predetermined shells and having superior characteristics can be obtained.

### Brief Description of Drawings

FIG. 1 is a flowchart showing a process according to the method of the present invention including linkage with previous processes.
FIG. 2 is a TEM photograph of L1₀-FePt core/Fe shell composite nano-particles made by the method of the present invention.

### Best Mode For Carrying Out The Invention

As a first embodiment of the method of production of the present invention, an example of L1₀-FePt core/Fe shell composite nano-particles comprising L1₀-FePt nano-particles as cores over which Fe is covered as shells will be explained.

Here, in L1₀-FePt core/Fe shell composite nano-particles, L1₀-FePt having an L1₀ ordered crystal structure has an extremely high magnetic coercive force (ultrahard magnetic properties). By covering this by Fe having high magnetization (soft magnetic properties), magnetic nano-particles having semihard magnetic properties suited for, for example, magnetic recording media such as hard disks or high performance permanent magnets for use in motors can be expected to be obtained.

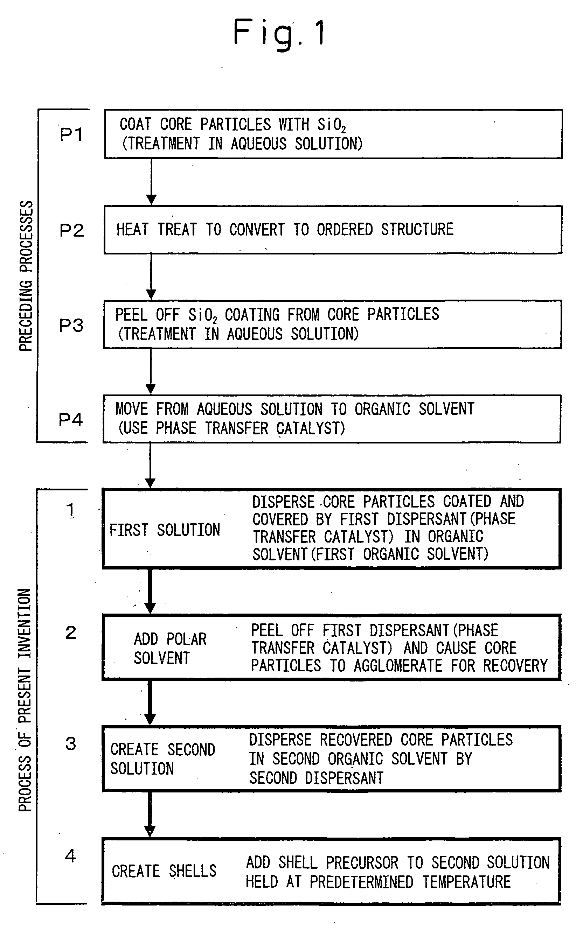

Referring to FIG. 1, a method of production of the present invention and processes preceding it will be explained.

The preceding processes include heat treatment for converting the core particles to an ordered structure (P2), the processes preceding it (P1), and the processes after it (P3 and P4).

FePt nano-particles are typically organically synthesized using Fe(CO)₅ and Pt(acac)₂. FePt alloys have an ordered/disordered transformation point of about 900°C and generally have ordered structures under ordinary temperature in the case of a bulk material. In this regard, nano-particles have a disordered structure even at ordinary temperature. To convert them to an ordered structure, heat treatment at a high temperature of 550°C or more, preferably exceeding the transformation point, is necessary. However, nano scale fine particles easily agglomerate. If heat treating them as they are, the particles will end up sintering and a nano-particle state will not be able to be secured.

Therefore, as pretreatment, at step P1, as a sinter preventing barrier layer, an SiO₂ coating for example, is formed on the FePt nano-particle surfaces. This is done by treatment using an aqueous solution.

Next, at step P2, heat treatment is applied at a high temperature of 550°C or more or the transformation point (approximately 900°C) or more so as to acquire L1₀-FePt nano-particles with an L1₀ ordered crystal structure. However, SiO₂ is stable with respect to this heat treatment, so the surfaces of the acquired L1₀-FePt nano-particles remain in a state covered by the SiO₂ coating. In this state, shells cannot be formed on the L1₀-FePt nano-particle surfaces.

Therefore, as post treatment, at step P3, the particles are treated in an alkali aqueous solution so as to dissolve away the SiO₂ coatings and expose fresh L1₀-FePt nano-particle surfaces. However, Fe or other pure metals which form shells on the nano-particle surfaces are easily oxidized in water, so shells cannot be formed while in the aqueous solution.

Therefore, as further post treatment, at step P4, the L1₀-FePt nano-particles are moved from the aqueous solution to an organic solvent. For this, it is necessary to use a phase transfer catalyst. The phase transfer catalyst sticks to and covers the L1₀-FePt nano-particle surfaces and extremely effectively disperses the L1₀-FePt nano-particles in the organic solvent. This organic solvent will not oxidize the shell material, that is Fe or other pure metal, so provides a preferable reaction environment for safely forming the Fe shells.

However, a phase transfer catalyst generally has a high molecular weight and a structure with many branches and strongly sticks to the L1₀-FePt nano-particle surfaces to thereby impede substances from the outside reaching the particle surfaces. Thus, to form shells on the L1₀-FePt nano-particle surfaces, it is necessary to remove the phase transfer catalyst from the L1₀-FePt nano-particle surfaces.

Therefore, as explained below, the process of the present invention is applied.

The process of the present invention removes the phase transfer catalyst, uses a separate dispersant to make the nano-particles disperse in a separate organic solvent, and forms the shells in that state.

First, at step 1, as a first solution, the solution obtained at the final step 4 of the preceding processes is prepared. That is, the first solution is comprised of the L1₀-FePt core particles to which the first dispersant constituted by the phase transfer catalyst is strongly stuck and covered dispersed in the first organic solvent constituted by the above organic solvent.

Next, at step 2, a polar solvent is used to peel off the first dispersant (phase transfer catalyst) from the L1₀-FePt nano-particle surfaces. The phase transfer catalyst acts as a dispersant dispersing the L1₀-FePt nano-particles in the organic solvent, so the L1₀-FePt nano-particles from which the phase transfer catalyst is removed agglomerate in the organic solvent. This is recovered and used in the next step.

As the polar solvent, a lower alcohol such as methanol, ethanol, and propanol having a comparatively weak polarity is suitable. As other polar solvents, for example, acetone is too strong in polarity, the nano-particles from which the phase transfer catalyst has been peeled off end up strongly agglomerating, and dispersion by the second dispersant added at the next step becomes difficult. Further, water is also a polar solvent, however, as explained in the preceding processes, it is strongly oxidizing and will oxidize the pure metal of the material forming the shells, so naturally cannot be used. As the properties of the polar solvents, it is preferable that the viscosity not be too high and amphipathic properties be possessed.

Next, at step 3, the L1₀-FePt nano-particle agglomerates recovered at step 2 are dispersed in a second organic solvent containing the second dispersant. The result is made the second solution. As the second dispersant, one that does not hinder the shell forming reaction of the next step and is stable at the shell formation temperature (does not boil nor degrade under heat) is selected.

Next, at step 4, a shell precursor is added to the second solution created at step 3 and the solution is held at the shell formation temperature to thereby form the shells (for example Fe coating) on the L1₀-FePt nano-particle surfaces. As the shell precursor, typically it is possible to use an organic complex containing the constituent elements of the shells. As the precursor of an Fe shell, for example, Fe(CO)₅ or Fe(acac)₃ is suitable. At the shell formation temperature, a heat decomposition reaction occurs with the Fe(CO)₅ or a reduction reaction occurs with the Fe(acac)₃ causing Fe to precipitate at the core surfaces and form shells.

By the above process, it is possible to obtain L1₀-FePt core/Fe shell composite nano-particles comprising L1₀-FePt nano-particles as cores on the surfaces of which Fe shells are covered.

### Examples

According to the method of the present invention, L1₀-FePt core/Fe shell composite nano-particles were prepared by the following steps.

### [Step 1: Preparation of first solution... by the preceding processes]

Due to the preceding processes shown in FIG. 1, (step P1) an SiO₂ coating was formed, (step P2) heat treatment was applied, (step P3) the SiO₂ coating was peeled off, and (step P4) the particles were moved to an organic solvent. The obtained solution was used as a first solution. At the preceding processes, at step P1, organically synthesized FePt nano-particles were treated in a TEOS aqueous solution to form SiO₂ coatings. As step P2, these were heat treated in a 5%H₂+Ar mixed gas atmosphere at 900°C for one hour to obtain L1₀-FePt nano-particles. At step P3, these were treated in an N(Me)₄OH alkali aqueous solution to dissolve away their SiO₂ coatings. At step P4, hexadecyl trimethylammonium bromide was used as a phase transfer catalyst to move the particles from the aqueous solution to an organic solvent constituted by chloroform. The result was used as the first solution.

That is, the first solution is comprised of L1₀-FePt nano-particles heat treated to convert them to an ordered structure dispersed by a phase transfer catalyst constituted by hexadecyl trimethylammonium bromide in a first organic solvent constituted by chloroform.

### [Step 2: Addition of polar solvent]

As a polar solvent, ethanol (40 g) was added to the first solution (15 g). The result was centrifuged at 1000 rpm for 10 minutes to recover agglomerates of L1₀-FePt nano-particles.

### [Step 3: Preparation of second solution]

The recovered agglomerates of L1₀-FePt nano-particles were dispersed in a second organic solvent constituted by n-octylether (7.71 g) containing oleic acid (0.1 g) and oleylamine (0.1 g) as a second dispersant. This was used as a second solution.

### [Step 4: Formation of shells]

In an argon gas atmosphere, the second solution was held at the shell forming temperature of 170°C and an Fe shell precursor constituted by Fe(CO)₅ was added at a rate of 0.2 ml per hour. The reaction'time was made 4 hours. The precursor was added a total of 4 times.

Here, the oleic acid and oleylamine used as the second dispersant are stable at temperatures up to about 350°C, do not boil or degrade by heating at the shell forming temperature of 170°C, and do not impede the shell forming reaction.

Due to the above treatment, L1₀-FePt core/Fe shell composite nano-particles comprised of L1₀-FePt nano-particles of a particle size of 5 to 10 nm as cores covered on their surfaces by approximately 2 nm thick Fe shells were obtained.

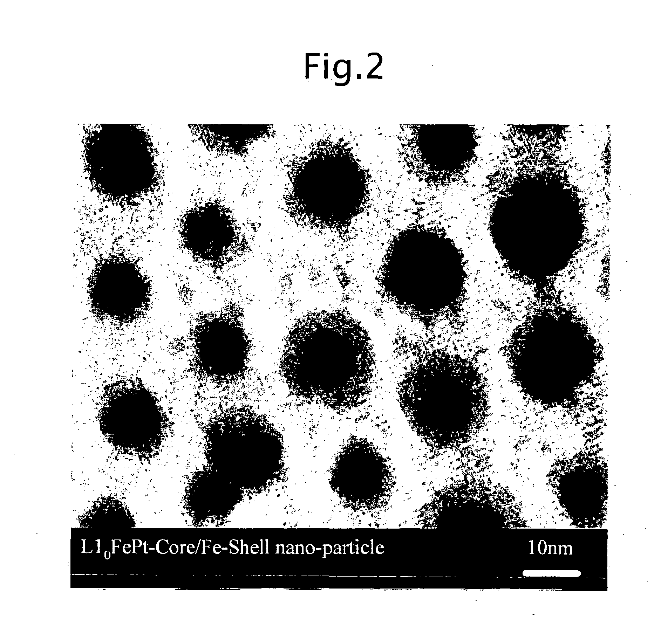

FIG. 2 shows a TEM photograph of the obtained composite nano-particles. The black circles in the observed field are the L1₀-FePt nano-particle cores, and the gray ring-like portions surrounding them are shells comprised of Fe. The bright regions between the composite nano-particles are the oleic acid and oleylamine used as the second dispersant.

In the obtained L1₀-FePt core/Fe shell composite nano-particles, the L1₀-FePt having an L1₀ ordered crystal structure has an extremely high magnetic coercive force (ultrahard magnetic properties). By covering these by Fe having high magnetization (soft magnetic properties), these are useful as magnetic nano-particles having semihard magnetic properties suited for, for example, magnetic recording media such as hard disks or high performance permanent magnets for use in motors. To adjust the semihard characteristics in response to demand, it is sufficient to adjust the total added amount (amount added each time x number of times of addition) of the shell precursor during the shell formation treatment of step 4 to adjust the ratio of the shell thickness to the core diameter.

Above, the method of the present invention was explained for the specific example of forming Fe shells on FePt cores, however, it is not necessary for the combination of the cores/shells to which the present invention can be applied to be limited to this. For example, the present invention can be applied, for example, to various types of combinations as follows even in the case of just the field of magnetic characteristics.

### [Core: Examples of magnetic nano-particles]

FePt magnetic nano-particles...(explained in examples)
FePd magnetic nano-particles
Nd₂Fe₁₄B magnetic nano-particles
Sm₂Co₁₇ magnetic nano-particles
MnBi magnetic nano-particles

### [Shell: Examples of magnetic shells]

Fe... (explained in examples)
FeCo alloy
FeNi alloy
FeMn alloy
Co
CoNi alloy
CoMn alloy
Ni
NiMn alloy
Mn
Fe, Co, Ni, and Mn ternary alloys or quaternary alloys (with various composition ratios)

Above, the scope of application of the present invention was illustrated for the field of magnetic characteristics, but of course the present invention can be applied to other fields so long as a combination by which nano-particles can be created and shells can be formed on their surfaces.

### Industrial Applicability

According to the present invention, there is provided a method of producing core/shell composite nano-particles exhibiting superior characteristics, by using as cores nano-particles heat treated in advance so as to give them a specific crystal structure in a state using a barrier layer to prevent sintering and forming shells on their surfaces, which eliminates hindrances to the shell forming reaction due to the phase transfer catalyst or other strongly sticky dispersant.

## Claims

1. A method of producing core/shell composite nano-particles comprising nano-sized core particles covered by shells, said method comprising:
a step of dispersing core particles heat treated in advance to give them a crystal structure expressing the necessary characteristics in a first organic solvent by a first dispersant to prepare a first solution,
a step of adding a polar solvent to the first solution to peel off the first dispersant from the core particles and making the nano-particles agglomerate to recover them,
a step of making the recovered core particles disperse in a second organic solvent by a second dispersant to form a second solution, and
a step of adding a precursor of the shells to the second solution and forming shells on the surfaces of the core particles.

2. A method as set forth in claim 1, wherein the polar solvent is an alcohol.

3. A method as set forth in claim 1 or 2, wherein the second dispersant is stable at the shell forming temperature.

4. A method as set forth in any one of claims 1 to 3, wherein the first dispersant is a phase transfer catalyst.
